# EUROPÄISCHE PATENTSCHRIFT

(11) **EP 4 214 085 B1**
(45) Veröffentlichungstag und Bekanntmachung des Hinweises auf die Patenterteilung: **07.05.2025**
(21) Anmeldenummer: 21765877.2
(22) Anmeldetag: 18.08.2021
(51) Int. Cl.: B60N 2/22, A47C 1/025

(54) **LEHNENEINSTELLBESCHLAG MIT EINER VER- UND ENTRIEGELUNGSEINRICHTUNG UMFASSEND ZWEI UNABHÄNGIG VONEINANDER EINSTELLBARE VERRIEGELUNGSMECHANISMEN**
RECLINER WITH A LOCKING- AND UNLOCKING DEVICE HAVING TWO INDEPENDENTLY ADJUSTABLE LOCKING MECHANISMS
ARTICULATION RÉGLABLE DE DOSSIER COMPRENANT UN DISPOSITIF DE VERROUILLAGE ET DE DÉVERROUILLAGE AVEC DEUX MÉCANISMES DE VERROUILLAGE AJUSTABLE INDÉPENDAMMENT

(30) Priorität: 15.09.2020 DE 102020123963
(43) Veröffentlichungstag der Anmeldung: 26.07.2023
(73) Patentinhaber: Brose Sitech GmbH, 38442 Wolfsburg (DE); Brose Sitech Sp. z o.o., 59-101 Polkowice (PL)
(72) Erfinder: BARKOW, Tomas, 38102 Braunschweig (DE); DOMINIKOWSKI, Michal, 66-008 Swidnica (PL)
(74) Vertreter: Gulde & Partner
(86) Internationale Anmeldenummer: PCT/EP2021/072907
(87) Internationale Veröffentlichungsnummer: WO 2022/058115

(56) Entgegenhaltungen:
- EP-A1- 1 935 287
- JP-A- 2007 130 455
- JP-B2- 3 881 075

## Beschreibung

Die Erfindung betrifft einen Lehneneinstellbeschlag mit einer Ver- und Entriegelungseinrichtung, die zwei Beschlagteile des Lehneneinstellbeschlages in einer Verriegelungsposition verriegelt, wobei einem der Beschlagteile eine Schnecke mit einer Schneckenverzahnung und dem anderen Beschlagteil ein Schneckenrad zugeordnet sind, wobei die Schneckenverzahnung in das Schneckenrad eingreift.

Aus der Druckschrift DE 44 22 529 C2 ist eine Blockiervorrichtung für eine manuelle Schnellverstellvorrichtung bekannt, die insbesondere für Rückenlehnen von Kraftfahrzeugsitzen eingesetzt wird. Die Blockiervorrichtung umfasst eine in einem Gehäuse gelagerte Schnecke, die in eine Gegenverzahnung eines weiteren Getriebeelements eingreift und mit einem an der Schnecke angeordneten Verriegelungsbereich, der zum Zwecke der Blockierung der Schnellverstellvorrichtung mit einem als Schieber ausgebildeten Verriegelungselement reibschlüssig oder formschlüssig in Eingriff bringbar ist.

Die Druckschrift EP 1 935 287 B1 beschreibt eine Lehnenverstellvorrichtung, die eine an einem rückwärtigen Sitzrahmen angebrachte bewegbare Konsole drehbar an einer festen Konsole lagert und einen Neigungswinkel einer Sitzlehne einstellt, wobei eine Schnecke entweder an der festen Konsole oder der bewegbaren Konsole gelagert ist. Die Lehnenverstellvorrichtung umfasst ferner ein Schneckenrad, das mit der Schnecke in Eingriff ist und entsprechend jeweils an der bewegbaren Konsole oder der festen Konsole gelagert ist, wobei ein Eingriffselement, das mit der Schnecke in Eingriff gelangen kann, die Schnecke dann unter Ausschluss einer Drehung derselben festlegt, wobei ein Ende in einer Axialrichtung der Schnecke von einem festen Lager gelagert ist, das an der festen Konsole oder der bewegbaren Konsole angebracht ist. Das andere Ende der Schnecke ist in der Axialrichtung von einem bewegbaren Lager gelagert, das in einer Richtung senkrecht zu der Axialrichtung der Schnecke bewegbar gelagert und an der festen Konsole oder der bewegbaren Konsole angebracht ist. Vorgesehen ist, ein Presselement, welches das bewegbare Lager in eine Richtung drückt, dass es sich dem Schneckenrad derart nähert, dass sich die axiale Mitte der Schnecke um ein Ende der Seite des festen Lagers neigt, wodurch die Schnecke derart hin zum Schneckenrad gedrückt wird, wobei die Drehgeschwindigkeit der Schnecke durch Reibungskraft gebremst ist, wenn die Sitzlehne an einem vorbestimmten Neigungswinkel gehalten ist.

Die Druckschrift EP 3 017 997 B1 offenbart einen Drehbewegungssteuermechanismus, wobei ein zweites Element in Bezug auf ein erstes Element in einem geeigneten Drehwinkel gehalten wird, wobei der Drehbewegungssteuermechanismus eine Schnecke umfasst. Die Schnecke ist axial zwischen Lagerteilen, die an beiden Endabschnitten in einer axialen Richtung der Schnecke angeordnet sind, abgestützt, und in eine Richtung verschiebbar, die im Wesentlichen zu einer axialen Mitte orthogonal verläuft. Es ist ein abtriebsseitiges Schneckenrad und ein antriebsseitiges Hauptschneckenrad angeordnet, wobei die Schnecke so aufgebaut ist, dass sie zwischen dem antriebsseitigen Hauptschneckenrad und dem abtriebsseitigen Schneckenrad abgestützt ist und sich mit diesem verzahnt. Der Drehbewegungssteuermechanismus ist derart aufgebaut, dass das abtriebsseitige Schneckenrad über eine Drehkraft gedreht wird, die die Schnecke relativ über das antriebsseitige Hauptschneckenrad dreht und eine Drehkraft des abtriebsseitigen Schneckenrads in der Schnecke regeneriert wird.

Die Druckschrift WO 2008/104334 A1 erläutert einen Verstellbeschlag für eine Kraftfahrzeugkomponente, insbesondere einen Fahrzeugsitz, mit einem ersten Beschlagteil und mit einem hierzu mittels eines Getriebes um eine Drehachse drehverstellbar vorgesehenen zweiten Beschlagteil, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind. Vorgesehen ist, dass die Keilsegmente radial außenseitig in einer eine Buchsenverzahnung aufweisende Gleitbuchse gelagert sind, wobei der Verstellbeschlag ein Bremselement aufweist, wobei das Bremselement alternativ in einer Freigabestellung oder in einer Blockierstellung einstellbar ist, wobei das Bremselement in der Freigabestellung innerhalb des Radius der Gleitbuchse angeordnet ist und wobei das Bremselement in der Blockierstellung in die Buchsenverzahnung eingreift.

In der Druckschrift DE 196 02 928 C1 wird eine weitere Verstellvorrichtung für einen Kraftfahrzeugsitz mit zwei gegeneinander in Längsrichtung verschiebbaren und miteinander verbundenen Verstellelementen beschrieben, die eine Verriegelungsvorrichtung aufweist, die ein mit dem einen Verstellelement gekoppeltes und von dem anderen Verstellelement geführtes Verschiebeelement aufweist, wobei dass, das Verschiebeelement führende Verstellelement mit einer in Längsrichtung verlaufende Verzahnung versehen oder verbunden ist, in die das Verschiebeelement eingreift. Die Verstellvorrichtung weist auch eine Auslösevorrichtung zum Ver- und Entriegeln der Verriegelungsvorrichtung auf, die dadurch gekennzeichnet ist, dass das Verschiebeelement eine Schraubenfeder ist, die im entspannten Zustand innerhalb der Verzahnung frei drehbar ist und einen Steigungswinkel aufweist, der außerhalb des Selbsthemmungsbereiches liegt, und dass der Schraubenfeder ein durch die Auslösevorrichtung betätigbares Bremselement zugeordnet ist, das im Verriegelungszustand auf die Schraubenfeder eine Kraft ausübt, wodurch diese blockiert wird.

Es wird zudem auf die gattungsgemäßen Druckschriften JP 2007 130455 A und JP 3 881075 B2 verwiesen. Der Erfindung liegt die Aufgabe zugrunde, einen Verstellbeschlag für eine Kraftfahrzeugkomponente, insbesondere ein Fahrzeugsitz anzugeben, der hohe Kräfte aufnehmen und komfortabel im Wesentlichen spielfrei verstellt werden kann.

Ausgangspunkt der Erfindung ist ein Lehneneinstellbeschlag mit einer Ver- und Entriegelungseinrichtung, die zwei Beschlagteile des Lehneneinstellbeschlages in einer Verriegelungsposition verriegelt, wobei einem der Beschlagteile eine Schnecke mit einer Schneckenverzahnung und dem anderen Beschlagteil ein Schneckenrad zugeordnet sind, wobei die Schneckenverzahnung in das Schneckenrad eingreift, wobei die Ver- und Entriegelungseinrichtung zwei Verriegelungsmechanismen aufweist, wobei der erste Verriegelungsmechanismus in der Verriegelungsposition radial zur Längserstreckung der Schnecke und der zweite Verriegelungsmechanismus in der Verriegelungsposition axial in Längserstreckung der Schnecke auf die Schnecke einwirken, so dass die Schnecke in ihrer Verriegelungsposition mit ihrer Schneckenverzahnung in dem Schneckenrad zweifach verspannt angeordnet ist, wobei der erste Verriegelungsmechanismus ein Betätigungselement aufweist, das auf ein radiales Spannelement einwirkt, welches die Schnecke in der Verriegelungsposition in einer radialen Wirkrichtung zu ihrer Längserstreckung verspannt, und der zweite Verriegelungsmechanismus ein Betätigungselement aufweist, das auf ein axiales Spannelement einwirkt, welches die Schnecke in der Verriegelungsposition in einer axialen Wirkrichtung in ihrer Längserstreckung verspannt, wobei die Verriegelungsposition der Verriegelungsmechanismen durch eine Bedienhandlung eines Betätigungsgliedes erfolgt, das mit einem der Verriegelungsmechanismen in Wirkverbindung steht, und die Entriegelungsposition der Verriegelungsmechanismen durch eine zu der Bedienhandlung des Betätigungsgliedes in Verriegelungsposition umgekehrter Bedienhandlung erfolgt. Erfindungsgemäß ist vorgesehen, dass die Betätigungselemente in der Verriegelungsposition spielbehaftet zueinander angeordnet sind, wobei die Betätigungselemente Nasen aufweisen, die in der Verriegelungsposition mit einem Spiel zueinander angeordnet sind, wobei das Spiel erst bei der Betätigung der Betätigungselemente mittels des Betätigungsgliedes in die Entriegelungsposition aufgehoben wird, da die Ver- und Entriegelungseinrichtung ein Betätigungsglied aufweist, das mit einem der Betätigungselemente in direkter Wirkverbindung steht, so dass die Betätigung des Betätigungsgliedes von der Verriegelungsposition in die Entriegelungsposition zu einer Betätigung des mit dem einen der Betätigungselemente in direkter Wirkverbindung stehenden Betätigungselementes zu einer indirekten Mitnahme des anderen Betätigungselementes führt, wobei die indirekte Mitnahme des anderen Betätigungselementes unter Überwindung des Spieles zwischen den Nasen der Betätigungselemente erfolgt, wobei die Betätigungselemente Exzenterelemente sind, deren Exzenterbereiche, bei der Betätigung mittels der einen Bedienhandlung des Betätigungsgliedes von der Entriegelungsposition in die Verriegelungsposition auf die Spannelemente einwirken, wobei die Verriegelungsposition der Spannelemente durch die Exzenterelemente unabhängig voneinander in radialer und axialer Richtung zur der Längserstreckung der Schnecke eingestellt wird, wobei Verriegelungskräfte erzeugt werden, die zur der Längserstreckung der Schnecke gesehen, auf die Schnecke einwirken.

Bevorzugt ist vorgesehen, dass das radiale Spannelement ein Bremsklotz ist, der in Verriegelungsposition aus radialer Richtung auf die Schneckenzahnung der Schnecke wirkt, so dass die Schnecke in ihren Lagern in radialer Richtung zur Längserstreckung der Schnecke verspannt ist.

Es ist zudem bevorzugt vorgesehen, dass das axiale Spannelement das bewegliche Element eines beweglichen Lagers ist, in dem die Schnecke einendseitig gelagert ist, wobei das bewegliche Element gegenüber seiner Lage in der Entriegelungsposition in radialer Richtung verlagert ist, wodurch das bewegliche Lager der Schnecke in der Verriegelungsposition einendseitig radial verschoben ist, so dass die Schnecke gegenüber ihrem gegenüberliegenden Festlager in axialer Richtung in Längserstreckung der Schnecke verspannt ist.

Die Erfindung wird nachfolgend anhand der zugehörigen Zeichnungen erläutert. Es zeigen:
- Figur 1: eine Seitenansicht eines Rückenlehnenteiles mit einer Lehnenverstellvorrichtung;
- Figur 2: eine vergrößerte perspektivische Darstellung der Lehnenverstellvorrichtung gemäß Figur 1;
- Figur 3: eine vergrößerte Ansicht der Lehnenverstellvorrichtung in einer Verriegelungsposition gemäß Figur 1;
- Figur 4: eine vergrößerte Ansicht der Lehnenverstellvorrichtung in einer Verriegelungsposition gemäß Figur 1.

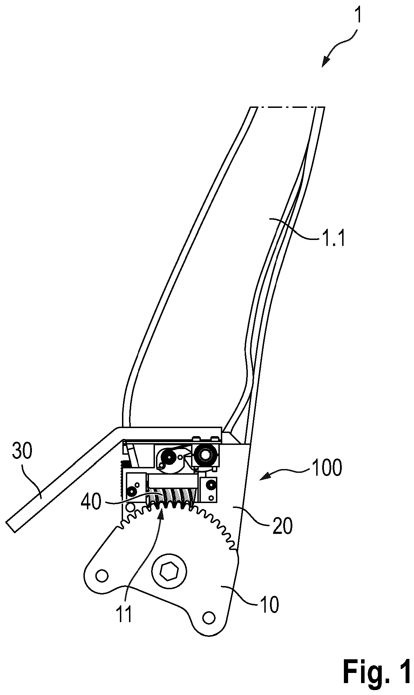

Die Figur 1 zeigt eine Rückenlehne 1 mit einer Rückenlehnenstruktur 1.1. Die Rückenlehnenstruktur 1.1 ist mit einem zweiten Beschlagteil 20 verbunden, welches nachfolgend auch als rückenlehnenseitiges Beschlagteil bezeichnet wird. Im ausgewählten Ausführungsbeispiel ist das rückenlehnenseitige Beschlagteil 20 gegenüber einem ersten Beschlagteil 10 beweglich angeordnet, welches als ortsfestes Beschlagteil angeordnet ist. Das ortsfeste Beschlagteil 10 ist im Ausführungsbeispiel mit dem nicht näher dargestellten Sitzteil des Fahrzeugsitzes verbunden, weshalb das Beschlagteil 10 auch als sitzteilseitiges Beschlagteil bezeichnet wird. Die Lehnenverstellvorrichtung 100 weist somit ein erstes Beschlagteil 10 und ein zweites Beschlagteil 20 auf, die gemeinsam auch als Lehneneinstellbeschlag 10, 20 bezeichnet werden, der zur Lehnenneigungsverstellung relativ zueinander beweglich angeordnet sind.

Gemäß Figur 1 umfasst die Lehnenverstellvorrichtung 100 ein Betätigungsglied 30, in der Art eines Hebels und eine Schnecke 40, wobei eine Schneckenverzahnung 41 der Schnecke 40 in ein Schneckenradsegment des Beschlagteiles 10 eingreift. Das Schneckenradsegment 11 ist wie bereits in Figur 1 erkennbar ist, auf einer Stirnseite des sitzteilseitigen Beschlagteiles 10 in einem dafür vorgegebenen Bereich angeordnet.

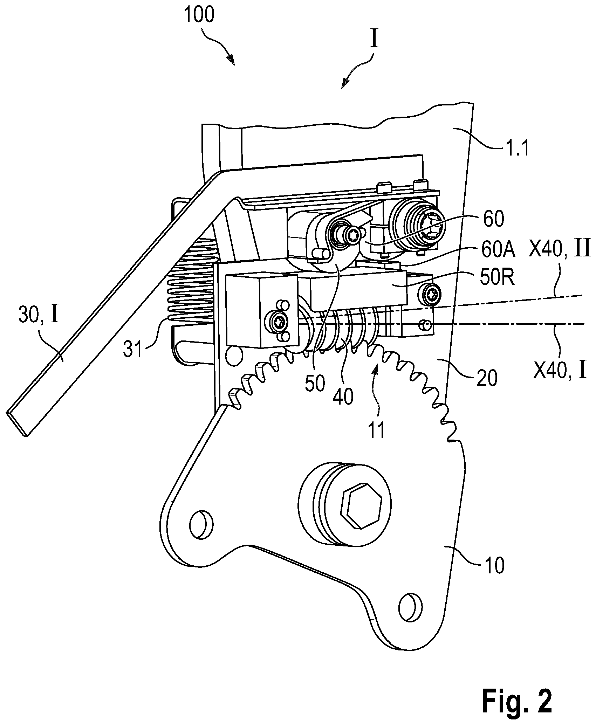

Die Figur 2 zeigt die Lehnenverstellvorrichtung 100 gemäß Figur 1 in einer vergrößerten Darstellung. In Figur 2 ist die Verriegelungsposition I des Lehneneinstellbeschlages 10, 20 dargestellt. Das in Figur 2 dargestellte Betätigungsglied 30 in der Art eines Betätigungshebels befindet sich somit ebenfalls in seiner Verriegelungsposition I. Der Betätigungshebel 30 wird in seiner Verriegelungsposition I durch ein Federelement 31 gesichert. Das vorgespannte Federelement 31 ist einerseits mit dem beweglichen Beschlagteil 20 und andererseits mit dem Betätigungshebel 30 verbunden. Mit anderen Worten, eine Bewegung des Betätigungshebels 30 aus der Verriegelungsposition in die Entriegelungsposition ist nur unter Überwindung der Federkraft des Federelementes 31 möglich.

In Figur 2 ist in zentraler Position der Lehnenverstellvorrichtung 100 die Schnecke 40 angeordnet, die sich in der Verriegelungsposition I des Lehneneinstellbeschlages 10, 20 durch zwei Verriegelungsmechanismen, die noch näher erläutert werden, innerhalb des Lehneneinstellbeschlages 10, 20 verspannt ist.

Die Figur 2 zeigt eine gegenüber einer im Wesentlichen horizontalen Achse X40; II dargestellte Achse X40; I, in der die Achse der Schnecke 40 in der Verriegelungsposition I des Lehneneinstellbeschlages gegenüber der im Wesentlichen horizontalen Achse X40; II verlagert, insbesondere verkippt ist, wie noch näher erläutert wird.

Die Schnecke 40 ist in einer ersten Lagerkonsole 21 und einer in axialer Richtung A gegenüber liegenden zweiten Lagerkonsole 22 gelagert. Zu der zweiten Lagerkonsole 22 gehört ein axiales Spannelement 60A, welches in die zweite Lagerkonsole 22 integriert angeordnet ist. Die Lagerkonsolen 21, 22 sind lagefest mit dem rückenlehnenseitigen Beschlagteil 20 verbunden.

In der Lagerkonsole 21 und dem axialen Spannelement 60A sind jeweils Ausnehmungen angeordnet, in die schneckenseitige Lagerelemente eingreifen, die jedoch in den Figuren nicht näher dargestellt sind.

Diese schneckenseitigen Lagerelemente sind bevorzugt Kugelelemente, die in dafür in der Schnecke 40 ebenfalls vorgesehenen Ausnehmungen gelagert sind.

Die Aussparungen in den Lagerkonsolen 21, 22 und der Schnecke 40 sind so angeordnet, dass sie einerseits ein Festlager im Bereich der Lagerkonsole 21 andererseits ein bewegliches Lager in einem gegenüber der Lagerkonsole 22 beweglichen axialen Spannelement 60A aufweist.

Das Festlager, nachfolgend mit Bezugszeichen 21 und das bewegliche Lager, nachfolgend mit den Bezugszeichen 60A bezeichnet, liegen sich axial in Längserstreckung der Schnecke 40 gegenüber.

Durch diese Anordnung ist die Schnecke 40 drehbar um ihre Längsachse X40 zwischen dem Festlager und dem beweglichen Lager gelagert. Die Aussparungen, die in den Endflächen der Schnecke ausgebildet sind, und die Aussparung, die in dem Festlager ausgebildet ist, und die Aussparung, die in dem axialen Spannelement 60A ausgebildet ist, weisen eine im Wesentlichen konische Form auf und haben jeweils eine sich verjüngende Innenfläche mit einem Punkt, der als tiefste Stelle der konischen Ausnehmung ausgebildet ist.

Dabei ist vorgesehen, dass die Aussparung in dem axialen Spannelement 60A des beweglichen Lagers (auf die Aussparung gesehen) keine runde Form aufweist, sondern bevorzugt eine Langlochform (im Wesentlichen oval oder im Wesentlichen eiförmig) in Längsrichtung (die im Wesentlichen der Bewegungsrichtung des axialen Spannelementes 60A entspricht) aufweist.

Dadurch wird der Effekt erreicht, dass das bewegliche Lager, wenn es gemäß den Figuren 2, 3 und 4 durch die Bewegung des axialen Spannelementes 60A nach unten bewegt wird, das Kugelelement von oben durch die Innenfläche der Aussparung gedrückt wird, ohne nach rechts oder links zu rutschen.

Dadurch wird das Ende der Schnecke 40, das auf der Seite des beweglichen Lagers positioniert ist, in Richtung des Schneckenradsegmentes 11 verlagert, so dass die Schnecke 40 auf der Seite des beweglichen Lagers in gegenüber ihrer Längserstreckung X40 radialer Richtung verkippt wird und in der Verriegelungsposition I des Lehneneinstellbeschlages 10, 20 die Längsachse der Schnecke 40, die in den Figuren eingezeichnete Position X40; I einnimmt, wie noch erläutert wird.

Wie bereits erwähnt, wird die Schnecke 40 durch zwei Verriegelungsmechanismen durch axiales und radiales Verspannen gesichert.

Ein erster Verriegelungsmechanismus, der radiale Verriegelungsmechanismus 50, 50R, umfasst ein Betätigungselement 50 und ein radial wirkendes Spannelement 50R.

Der andere, zweite Verriegelungsmechanismus, der axiale Verriegelungsmechanismus 60, 60A, umfasst ein Betätigungselement 60 und das axial wirkende Spannelement 60A, welches in der bereits beschriebenen Lagerkonsole 22 beweglich angeordnet ist.

Wie bereits erläutert, erfolgt die Verlagerung des axialen Spannelementes 60A innerhalb der Lagerkonsole 22 in radialer Richtung zur Längsachse X40 der Schnecke 40, wodurch deutlich wird, dass die Bezeichnungen "radiales Spannelement" und "axiales Spannelement" 50R, 60A darauf abstellen, welche unterschiedlichen Wirkrichtungen die Spannelemente 50R, 60A in Verriegelungsposition I auf die Schnecke 40 ausüben.

Ein Betätigungselement 50 ist drehbeweglich auf einer Drehachse Y50 innerhalb der Rückenlehnenstruktur 1.1 oder des lehnenseitigen Beschlagteiles 20 gelagert.

Im Ausführungsbeispiel ist das Betätigungselement 50 im rückenlehnenseitigen Beschlagteil 20 drehbeweglich angeordnet.

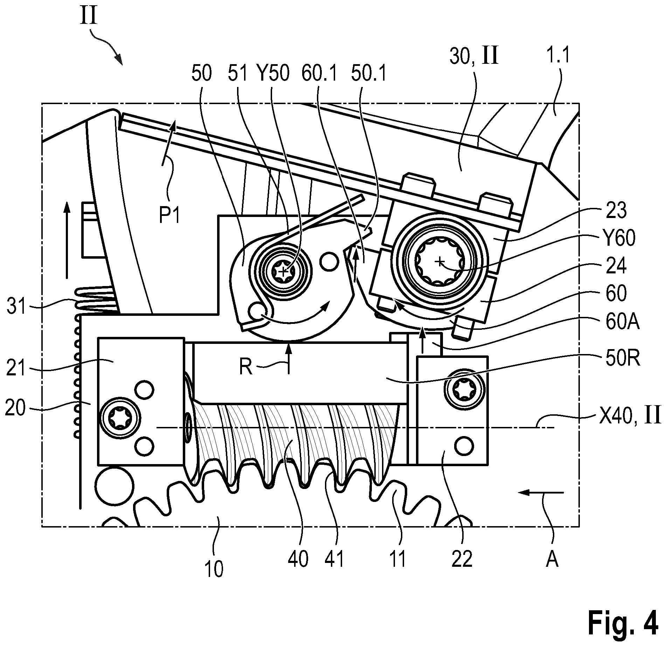

Ein Betätigungselement 60 ist in dafür vorgesehenen Lagerkonsolen 23, 24 drehbeweglich über eine Drehachse Y60 des Betätigungselementes 60 drehbeweglich angeordnet, wobei die Lagerkonsolen 23, 24 mit dem Betätigungshebel 30 in Verbindung stehen, so dass eine Drehbewegung des Betätigungselementes 60 in direkter Weise hervorgerufen wird, wenn der Betätigungshebel 30 aus seiner Verriegelungsposition I gemäß den Figuren 1, 2 und 3 in seine Entriegelungsposition II gemäß Figur 4 betätigt ist.

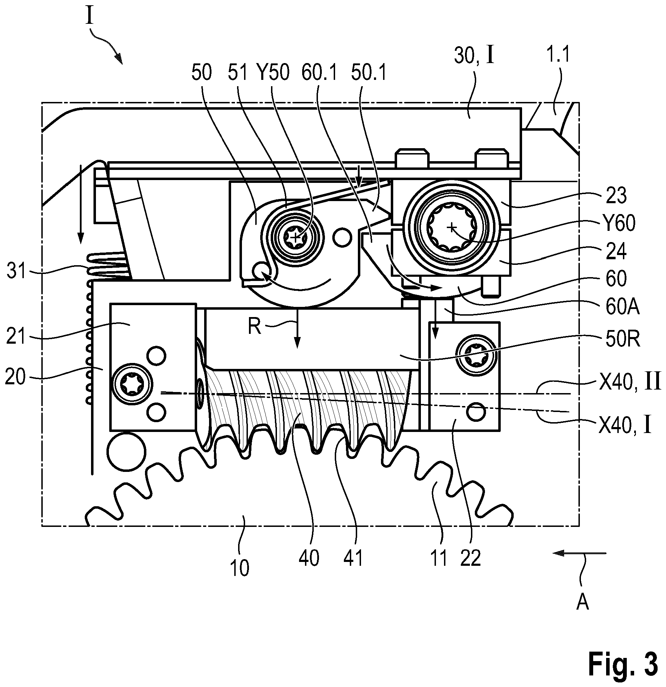

In der Figur 3 ist der Lehneneinstellbeschlag 10, 20 in seiner verriegelten Position (Verriegelungsposition I) dargestellt.

In Figur 4 ist der Lehneneinstellbeschlag 10, 20 in seiner entriegelten Position (Entriegelungsposition II) dargestellt.

Durch Vergleich der Figuren 3 und 4 kann die entsprechende Positionierung der Verriegelungsmechanismen 50, 50R und 60, 60A in der Verriegelungsposition I gemäß Figur 3 und der Entriegelungsposition II gemäß Figur 4 analysiert werden.

Es wird zunächst deutlich, dass das Betätigungselement 50 eine Nase 50.1 aufweist.

Das Betätigungselement 60 weist ebenfalls eine Nase auf, die mit dem Bezugszeichen 60.1 gekennzeichnet ist.

In Figur 3 wird deutlich, dass die gegenüberliegenden Flächen der Nasen 50.1, 60.1 in der Verriegelungsposition I spielbehaftet angeordnet sind, worin ein wesentlicher Vorteil der vorliegenden Erfindung gesehen wird, wie noch weiter erläutert wird.

In Figur 4 stehen die Nasen 50.1 und 60.1 in Kontakt, wodurch die Sicherung des Lehneneinstellbeschlages über die Verriegelungsmechanismen 50, 50R und 60, 60A durch Entriegelung des Betätigungshebels 30 aufgehoben ist, wie nachfolgend weiter detailliert erläutert wird.

Zu Figur 3 der Verriegelungsposition I des Lehneneinstellbeschlages:
Im gewählten Ausführungsbeispiel ist das Betätigungselement 50 ein exzentrisch ausgebildetes Element, welches nachfolgend als Exzenter-Betätigungselement 50 bezeichnet wird.

Das Betätigungselement 60 ist ebenfalls ein exzentrisch ausgebildetes Element, welches nachfolgend als Exzenter-Betätigungselement 60 bezeichnet wird.

Das Exzenter-Betätigungselement 50 ist in der Verriegelungsposition I des Betätigungshebels 30 in einer Ausgangsposition durch ein Federelement 51 angeordnet, welches das Exzenter-Betätigungselement 50 in seiner Ausgangsposition hält.

Das Federelement 51 ist beispielsweise als Blattfeder ausgebildet, und hintergreift einendseitig einen Vorsprung des Exzenter-Betätigungselementes 50 und ist anderenends, mit seinem freien Ende an einer Unterseite des Betätigungshebels 30 festgelegt.

In dieser Ausgangsposition des Exzenter-Betätigungselementes 50 drückt der exzentrische Bereich des Exzenter-Betätigungselementes 50 das radiale Spannelement 50R in radialer Richtung R zur axialen Längsachse X40 der Schnecke 40 auf die Schneckenverzahnung 41 der Schnecke 40. Auf der zur Schnecke 40 weisenden Seite des radialen Spannelementes 50R ist umfangsseitig der Verzahnung der Schnecke 40 eine zylindrische Innenkontur ausgebildet, welche im verspannten Zustand durch den radialen Verriegelungsmechanismus 50, 50R auf die Stirnseiten der Schneckenverzahnung 41 der Schnecke 40 drückt.

Durch den radialen Verriegelungsmechanismus 50, 50R ist die Schnecke 40 somit radial in der Verriegelungsposition I verspannt.

Analog dazu wirkt das Exzenter-Betätigungselement 60 in der Verriegelungsposition I des Lehneneinstellbeschlages 10, 20 ebenfalls mit seinem exzentrischen Bereich auf das bewegliche Lagerteil der Lagerkonsole 22, so dass das bewegliche Lagerteil beziehungsweise das axiale Spannelement 60A in radialer Richtung R verschoben wird, und dadurch, wie zuvor erläutert, für eine axiale Verspannung der Schnecke 40 innerhalb der beiden sich gegenüberliegenden Lagerkonsolen 21, 22 sorgt.

Wie bereits erläutert, wird dabei die Längsachse X der Schnecke 40 aus der im Wesentlichen horizontalen Position X40, II in der Entriegelungsposition II in die Verriegelungsposition X40, I verkippt, wie in Figur 3 anhand der dargestellten Achsen X40, II gegenüber X40, I verdeutlicht wird.

Mit anderen Worten, durch den zweiten axialen Verriegelungsmechanismus 60, 60A ist die Schnecke 40 im Verriegelungszustand I nicht nur radial verspannt, sondern jetzt auch axial verspannt.

In Figur 4 ist die Entriegelungsposition II gezeigt:
Durch Betätigung des Betätigungshebels 30 gemäß dem in Figur 4 dargestellten Entriegelungspfeil P1, wird direkt die Lagerkonsole 23, 24 und das Exzenter-Betätigungselement 60 um die Drehachse Y60 in Uhrzeigerrichtung verlagert.

Dadurch nimmt die Nase 60.1 des Exzenter-Betätigungselementes 60 die Nase 50.1 des Exzenter-Betätigungselementes 50 mit, wobei zuvor das freie Ende des Federelementes 51 des Exzenter-Betätigungselementes 50 freigegeben worden ist, da der Betätigungshebel 30 in der Entriegelungsposition II das freie Ende des Federelementes 51 automatisch freigibt.

Dadurch bewegt sich das Exzenter-Betätigungselement 50 durch Einwirkung der Nase 60.1 des Exzenter-Betätigungselementes 60 gegen die Kraft des Federelementes 51 entgegen der Uhrzeigerrichtung um die Drehachse Y50 des Befestigungselementes 50, wodurch das radiale Spannelement 50R in radialer Richtung R zur axialen Richtung A der Längserstreckung X40 der Schnecke 40 entspannt wird. Gleichzeitig wird die axiale Verspannung durch den axialen Verriegelungsmechanismus 60, 60A aufgehoben, da sich das bewegliche Lager innerhalb der Lagerkonsole 22 radial in Richtung des Exzenter-Betätigungselements 60 verlagert. Dadurch wird auch die axiale Verspannung der Schnecke 40 aufgehoben, so dass eine Lehnenneigungsverstellung zwischen dem Schneckenradelement 11 und der Verzahnung 41 der Schnecke 40 durchgeführt werden kann.

Zur Herstellung der Verriegelungsposition I (gemäß Figur 3) wird der Betätigungshebel 30 wieder in umgekehrter Richtung des Betätigungspfeiles P1 in Figur 4 wieder in seine Verriegelungsposition gemäß den Figuren 1 bis 3 um die Drehachse Y60, die der Drehachse des Betätigungshebels 30 zurück verschwenkt, wodurch mit einer einzigen Betätigungsbewegung eine im Wesentlichen unabhängige Verspannung der Schnecke 40 über den radialen Verriegelungsmechanismus 50, 50R und den axialen Verriegelungsmechanismus 60, 60A erfolgt.

In vorteilhafter Weise erfolgt die Verspannung des radialen Verriegelungsmechanismus 50, 50R über den auf das freie Ende des Federelementes 51 wirkenden Betätigungshebel 30, der über das Federelement 51 eine Kraft auf das Exzenter-Betätigungselement 50 ausübt und über den Exzenterbereich des Exzenter-Betätigungselementes 50 die radiale Verlagerung des radialen Spannelementes 50R in radialer Richtung R bewirkt.

Unabhängig davon, wird durch die Drehbewegung des Betätigungshebels 30, der direkt auf die Drehachse der Exzenter-Drehachse Y60 des Exzenter-Betätigungselementes 60 wirkt, in vorteilhafter Weise unabhängig von dem Exzenter-Betätigungselement 50 eine Drehbewegung des Exzenter-Betätigungselementes 60 entgegen der Uhrzeigerrichtung bewirkt, wodurch das bewegliche Lagerteil radial verlagert und die Schnecke 40 - wieder - axial verspannt wird.

In vorteilhafter Weise findet somit beim Herstellen des radialen und axialen Verspannungszustandes der Schnecke, mithin des Lehneneinstellbeschlages 10, 20 eine unabhängig einstellbare und justierbare Verspannung, im Sinne der Betätigung mittels der zwei Verriegelungsmechanismen der Schnecke 40 statt, wobei der axiale und radiale Entspannungszustand in vorteilhafter Weise durch eine einzige Schwenkbewegung des Betätigungshebels 30 hervorgerufen wird.

Diese unabhängige Herstellung des axialen und radialen Verspannungszustandes mittels der zwei Verriegelungsmechanismen der Schnecke 40 ist besonders vorteilhaft, da die Bewegungsabläufe beziehungsweise die Beträge der zu verstellenden Spannelemente 50R (in radialer Richtung mit radialer Wirkrichtung) und 60A (in radialer Richtung mit axialer Wirkrichtung) unterschiedlich groß sind, so dass durch die dargestellte Lösung, insbesondere durch Anpassung der exzentrischen Bereiche der Exzenter-Betätigungselemente 50, 60 eine vorteilhafte Anpassung der Verspannungszustände der Verriegelungsmechanismen 50, 50R und 60, 60A in radialer und axialer Wirkrichtung möglich ist.

In vorteilhafter Weise, führt eine einzige Betätigungshandlung des Betätigungshebels 30 zur Herstellung des Verspannungszustandes (Verriegelungsposition I) und eine einzige Betätigungshandlung des Betätigungshebels 30 zur Herstellung des Entspannungszustandes (Entriegelungsposition II). Im Entspannungszustand (Entriegelungsposition II) sind die zwei Verriegelungsmechanismen 50, 50R; 60, 60A sogar spielbehaftet unabhängig voneinander angeordnet, da sich die Nasen 50.1, 60.1 nicht berühren. Die Einstellung der Verriegelungsmechanismen 50, 50R; 60, 60A kann somit in vorteilhafter Weise - jede für sich - auf die jeweils gewünschte auf die Schnecke 40 axiale und radiale Verriegelungskraft, mithin die axiale und radiale Verriegelungskraft des Lehnenbeschlages 10, 20 vorgenommen werden.

### Bezugszeichenliste

- 1: Rückenlehne
- 1.1: Rückenlehnenstruktur
- 10: erstes Beschlagteil
- 11: Schneckenrad/ Schneckenradsegment
- 20: zweites Beschlagteil
- 21: Lagerkonsole
- 22: Lagerkonsole
- 23: Lagerkonsole
- 24: Lagerkonsole
- 30: Betätigungsglied/-hebel
- 31: Federelement
- 40: Schnecke
- X40: Schneckenachse
- 41: Schneckenverzahnung
- 50, 50R: radialer Verriegelungsmechanismus
- 50R: radiales Spannelement
- 50: Betätigungselement
- 50.1: Nase
- Y50: Drehachse des Betätigungselementes 50
- 51: Federelement
- Y60: Drehachse des Betätigungselementes 60
- 60, 60A: axialer Verriegelungsmechanismus
- 60A: axiales Spannelement
- 60: Betätigungselement
- 60.1: Nase
- 100: Lehnen-Verstellvorrichtung
- I: Verriegelungsposition
- II: Entriegelungsposition
- A: axiale Richtung
- P1: Entriegelungspfeil
- R: radiale Richtung
- X: Längsachse der Schnecke
- Y: Drehachse

## Patentansprüche

1. Lehneneinstellbeschlag mit einer Ver- und Entriegelungseinrichtung, die zwei Beschlagteile (10, 20) des Lehneneinstellbeschlages in einer Verriegelungsposition (I) verriegelt, wobei einem der Beschlagteile (10, 20) eine Schnecke (40) mit einer Schneckenverzahnung (41) und dem anderen Beschlagteil (10, 20) ein Schneckenrad (11) zugeordnet sind, wobei die Schneckenverzahnung (41) in das Schneckenrad (11) eingreift, wobei die Ver- und Entriegelungseinrichtung zwei Verriegelungsmechanismen (50, 50R; 60, 60A) aufweist, wobei der erste Verriegelungsmechanismus (50, 50R) in der Verriegelungsposition (I) radial zur Längserstreckung (X) der Schnecke (40) und der zweite Verriegelungsmechanismus (60, 60A) in der Verriegelungsposition (I) axial in Längserstreckung (X) der Schnecke (40) auf die Schnecke (40) einwirken, so dass die Schnecke (40) in ihrer Verriegelungsposition (I) mit ihrer Schneckenverzahnung (41) in dem Schneckenrad (11) zweifach verspannt angeordnet ist, wobei er erste Verriegelungsmechanismus (50, 50R) ein Betätigungselement (50) aufweist, das auf ein radiales Spannelement (50R) einwirkt, welches die Schnecke (40) in der Verriegelungsposition (I) in einer radialen Wirkrichtung zu ihrer Längserstreckung (X) verspannt, und der zweite Verriegelungsmechanismus (60, 60A) ein Betätigungselement (60) aufweist, das auf ein axiales Spannelement (60A) einwirkt, welches die Schnecke (40) in der Verriegelungsposition (I) in einer axialen Wirkrichtung in ihrer Längserstreckung (X) verspannt, wobei die Verriegelungsposition (I) der Verriegelungsmechanismen (50, 50R; 60, 60A) durch eine Bedienhandlung eines Betätigungsgliedes (30) erfolgt, das mit einem der Verriegelungsmechanismen (50, 50R; 60, 60A) in Wirkverbindung steht, und die Entriegelungsposition (II) der Verriegelungsmechanismen (50, 50R; 60, 60A) durch eine zu der Bedienhandlung des Betätigungsgliedes (30) in Verriegelungsposition (I) umgekehrter Bedienhandlung erfolgt, **dadurch gekennzeichnet, dass** die Betätigungselemente (50, 60) in der Verriegelungsposition (I) spielbehaftet zueinander angeordnet sind, wobei die Betätigungselemente (50, 60) Nasen (50.1, 60.1) aufweisen, die in der Verriegelungsposition (I) mit einem Spiel zueinander angeordnet sind, wobei das Spiel erst bei der Betätigung der Betätigungselemente (50, 60) mittels des Betätigungsgliedes (30) in die Entriegelungsposition (II) aufgehoben wird, da die Ver- und Entriegelungseinrichtung ein Betätigungsglied (30) aufweist, das mit einem der Betätigungselemente (50, 60) in direkter Wirkverbindung steht, so dass die Betätigung des Betätigungsgliedes (30) von der Verriegelungsposition (I) in die Entriegelungsposition (II) zu einer Betätigung des mit dem einen der Betätigungselemente (50, 60) in direkter Wirkverbindung stehenden Betätigungselementes (50, 60) zu einer indirekten Mitnahme des anderen Betätigungselementes (50, 60) führt, wobei die indirekte Mitnahme des anderen Betätigungselementes (50, 60) unter Überwindung des Spieles zwischen den Nasen (50.1, 60.1) der Betätigungselemente (50, 60) erfolgt, wobei die Betätigungselemente (50, 60) Exzenterelemente sind, deren Exzenterbereiche, bei der Betätigung mittels der einen Bedienhandlung des Betätigungsgliedes (30) von der Entriegelungsposition (II) in die Verriegelungsposition (I) auf die Spannelemente (50R, 60A) einwirken, wobei die Verriegelungsposition (I) der Spannelemente (50R, 60A) durch die Exzenterelemente unabhängig voneinander in radialer und axialer Richtung (R, A) zur der Längserstreckung (X) der Schnecke (40) eingestellt wird, wobei Verriegelungskräfte erzeugt werden, die zur der Längserstreckung (X) der Schnecke (40) gesehen, auf die Schnecke (40) einwirken.

2. Lehneneinstellbeschlag nach Anspruch 1, **dadurch gekennzeichnet, dass** das radiale Spannelement (50R) ein Bremsklotz ist, der in Verriegelungsposition (I) aus radialer Richtung (R) auf die Schneckenzahnung (41) der Schnecke (40) wirkt, so dass die Schnecke (40) in ihren Lagern in radialer Richtung (R) zur Längserstreckung (X) der Schnecke (40) verspannt ist.

3. Lehneneinstellbeschlag nach Anspruch 1, **dadurch gekennzeichnet, dass** das axiale Spannelement (60A) das bewegliche Element (60A) eines beweglichen Lagers ist, in dem die Schnecke (40) einendseitig gelagert ist, wobei das bewegliche Element (60A) gegenüber seiner Lage in der Entriegelungsposition (II) in radialer Richtung (R) verlagert ist, wodurch das bewegliche Lager der Schnecke (40) in der Verriegelungsposition (I) einendseitig radial verschoben ist, so dass die Schnecke (40) gegenüber ihrem gegenüberliegenden Festlager in axialer Richtung (A) in Längserstreckung (X) der Schnecke (40) verspannt ist.

## Claims

1. Recliner of a backrest with a locking- and unlocking device, which locks two fitting parts (10, 20) of the recliner in a locking position (I), wherein a worm screw (40) having worm gearing (41) is associated with one of the fitting parts (10, 20) and a worm wheel (11) is associated with the other fitting part (10, 20), wherein the worm gearing (41) meshes with the worm wheel (11), wherein the locking- and unlocking device has two locking mechanisms (50, 50R; 60, 60A), wherein the first locking mechanism (50, 50R), in the locking position (I), acts on the worm screw (40) radially to the longitudinal extension (X) of the worm screw (40), and the second locking mechanism (60, 60A), in the locking position (I), acts on the worm screw (40) axially in the longitudinal extension (X) of the worm screw (40), so that, in its locking position (I), the worm screw (40) having its worm gearing (41) is arranged so as to be doubly braced in the worm wheel (11), wherein the first locking mechanism (50, 50R) has an actuating element (50) which acts on a radial clamping element (50R) which braces the worm screw (40) in the locking position (I) in a radial operative direction to its longitudinal extension (X), and the second locking mechanism (60, 60A) has an actuating element (60) which acts on an axial clamping element (60A) which braces the worm screw (40) in the locking position (I) in an axial operative direction in its longitudinal extension (X), wherein the locking position (I) of the locking mechanisms (50, 50R; 60, 60A) is effected by an operating action of an actuating member (30) which is in operative connection with one of the locking mechanisms (50, 50R; 60, 60A), and the unlocking position (II) of the locking mechanisms (50, 50R; 60, 60A) is effected by an operating action which is the reverse of the operating action of the actuating member (30) in the locking position (I), **characterized in that**
the actuating elements (50, 60) in the locking position (I) are arranged with play relative to one another, wherein the actuating elements (50, 60) have noses (50.1, 60.1) which, in the locking position (I), are arranged with play relative to one another, wherein the play is only abolished when the actuating elements (50, 60) are actuated by means of the actuating member (30) into the unlocking position (II), since the locking- and unlocking device has an actuating member (30) which is in direct operative connection with one of the actuating elements (50, 60), so that the actuation of the actuating member (30) from the locking position (I) into the unlocking position (II) leads to an actuation of the actuating element (50, 60) in direct operative connection with the one of the actuating elements (50, 60) leads to an indirect entrainment of the other actuating element (50, 60), wherein the indirect entrainment of the other actuating element (50, 60) is effected by overcoming the play between the noses (50.1, 60.1) of the actuating elements (50, 60), wherein the actuating elements (50, 60) are eccentric elements, the eccentric regions of which act on the clamping elements (50R, 60A) during the actuation by means of the one operating action of the actuating member (30) from the unlocking position (II) into the locking position (I), wherein the locking position (I) of the clamping elements (50R, 60A) is adjusted by the eccentric elements independently of one another in the radial and axial direction (R, A) to the longitudinal extension (X) of the worm screw (40), wherein locking forces are generated which, viewed from the longitudinal extension (X) of the worm screw (40), act on the worm screw (40).

2. Recliner according to Claim 1, **characterized in that** the radial clamping element (50R) is a brake pad which, in the locking position (I), acts on the worm toothing (41) of the worm screw (40) from the radial direction (R), so that the worm screw (40) is braced in its bearings in the radial direction (R) to the longitudinal extension (X) of the worm screw (40).

3. Recliner according to Claim 1, **characterized in that** the axial clamping element (60A) is the movable element (60A) of a movable bearing, in which the worm screw (40) is mounted at one end, wherein the movable element (60A) is displaced in the radial direction (R) with respect to its position in the unlocking position (II), as a result of which the movable bearing of the worm screw (40) is radially displaced at one end in the locking position (I), so that the worm screw (40) is braced with respect to its opposite fixed bearing in the axial direction (A) in the longitudinal extension (X) of the worm screw (40).

## Revendications

1. Articulation réglage de dossier avec un dispositif de verrouillage et de déverrouillage, qui verrouille deux parties de ferrure (10, 20) de la ferrure de réglage de dossier dans une position de verrouillage (I), une des parties de ferrure (10, 20) étant associée à une vis sans fin (40) avec une denture de vis sans fin (41) et l'autre partie de ferrure (10, 20) étant associée à une roue de vis sans fin (11), la denture de vis sans fin (41) s'engrenant dans la roue de vis sans fin (11), le dispositif de verrouillage et de déverrouillage présentant deux mécanismes de verrouillage (50, 50R ; 60, 60A), le premier mécanisme de verrouillage (50, 50R) agissant sur la vis sans fin (40) dans la position de verrouillage (I) radialement par rapport à l'extension longitudinale (X) de la vis sans fin (40) et le deuxième mécanisme de verrouillage (60, 60A) agissant sur la vis sans fin (40) dans la position de verrouillage (I) axialement dans l'extension longitudinale (X) de la vis sans fin (40), de telle sorte que la vis sans fin (40) est agencée de manière doublement serrée dans sa position de verrouillage (I) avec sa denture de vis sans fin (41) dans la roue de vis sans fin (11), le premier mécanisme de verrouillage (50, 50R) présentant un élément d'actionnement (50) qui agit sur un élément de serrage radial (50R) qui serre la vis sans fin (40) dans la position de verrouillage (I) dans une direction d'action radiale par rapport à son extension longitudinale (X), et le deuxième mécanisme de verrouillage (60, 60A) présentant un élément d'actionnement (60) qui agit sur un élément de serrage axial (60A) qui serre la vis sans fin (40) dans la position de verrouillage (I) dans une direction d'action axiale dans son extension longitudinale (X), la position de verrouillage (I) des mécanismes de verrouillage (50, 50R ; 60, 60A) étant obtenue par une action de commande d'un organe d'actionnement (30) qui est en liaison active avec l'un des mécanismes de verrouillage (50, 50R ; 60, 60A), et la position de déverrouillage (II) des mécanismes de verrouillage (50, 50R; 60, 60A) étant obtenue par une action de commande inverse de l'action de commande de l'organe d'actionnement (30) en position de verrouillage (I), **caractérisé en ce que**
les éléments d'actionnement (50, 60) sont agencé avec jeu l'un par rapport à l'autre dans la position de verrouillage (I), les éléments d'actionnement (50, 60) présentant des ergots (50.1, 60.1) qui sont agencés avec un jeu l'un par rapport à l'autre dans la position de verrouillage (I), le jeu n'étant supprimé que lors de l'actionnement des éléments d'actionnement (50, 60) au moyen de l'organe d'actionnement (30) dans la position de déverrouillage (II), car le dispositif de verrouillage et de déverrouillage présente un organe d'actionnement (30) qui est en liaison active directe avec l'un des éléments d'actionnement (50, 60), de telle sorte que l'actionnement de l'organe d'actionnement (30) de la position de verrouillage (I) à la position de déverrouillage (II) entraîne un actionnement de l'élément d'actionnement (50, 60) qui est en liaison active directe avec l'un des éléments d'actionnement (50, 60), pour un entraînement indirect de l'autre élément d'actionnement (50, 60), l'entraînement indirect de l'autre élément d'actionnement (50, 60) étant obtenu en surmontant le jeu entre les ergots (50.1, 60.1) des éléments d'actionnement (50, 60), les éléments d'actionnement (50, 60) étant des éléments excentriques dont les zones excentriques agissent sur les éléments de serrage (50R, 60A) lors de l'actionnement au moyen d'une action de commande de l'organe d'actionnement (30) de la position de déverrouillage (II) à la position de verrouillage (I), la position de verrouillage (I) des éléments de serrage (50R, 60A) étant ajustée par les éléments excentriques indépendamment les uns des autres dans les directions radiale et axiale (R, A) par rapport à l'extension longitudinale (X) de la vis sans fin (40), ce qui génère des forces de verrouillage qui, vues par rapport à l'extension longitudinale (X) de la vis sans fin (40), agissent sur la vis sans fin (40).

2. Articulation réglage de dossier selon la revendication 1, **caractérisée en ce que** l'élément de serrage radial (50R) est une plaquette de frein qui, en position de verrouillage (I), agit sur la denture de vis sans fin (41) de la vis sans fin (40) à partir de la direction radiale (R), de telle sorte que la vis sans fin (40) est serrée dans ses paliers dans la direction radiale (R) par rapport à l'extension longitudinale (X) de la vis sans fin (40).

3. Articulation réglage de dossier selon la revendication 1, **caractérisée en ce que** l'élément de serrage axial (60A) est l'élément mobile (60A) d'un palier mobile dans lequel la vis sans fin (40) est montée à une extrémité, l'élément mobile (60A) étant déplacé dans la direction radiale (R) par rapport à sa position dans la position de déverrouillage (II), moyennant quoi le palier mobile de la vis sans fin (40) est déplacé radialement à une extrémité dans la position de verrouillage (I), de telle sorte que la vis sans fin (40) est serrée par rapport à son palier fixe opposé dans la direction axiale (A) dans l'extension longitudinale (X) de la vis sans fin (40).
